# EUROPEAN PATENT APPLICATION

(11) **EP 4 494 499 A1**
(43) Date of publication of application: **22.01.2025**
(21) Application number: 23769944.2
(22) Date of filing: 23.04.2023
(51) Int. Cl.: A24F 40/46, A24F 40/40, A24F 40/42

(54) **AEROSOL GENERATING DEVICE**

(30) Priority: 14.03.2022 CN 202220573029 U
(71) Applicant: Imiracle (HK) Limited, Hong Kong, Hong Kong 999077 (HK)
(72) Inventor: XU, Wenkai, Hong Kong, China Hong Kong 999077 (CN)
(74) Representative: Michalski Hüttermann & Partner Patentanwälte mbB
(86) International application number: PCT/CN2023/090158
(87) International publication number: WO 2023/174442

(57) **Abstract**

Provided is an aerosol generating device, including an outer housing (1), an atomizer assembly (2), and a battery assembly (3); an axial first engagement portion (41) is arranged at an end of the atomizer assembly (2) facing the battery assembly (3); an axial second engagement portion (42) is arranged at an end of the battery assembly (3) facing the atomizer assembly (2); the first engagement portion (41) is plug-in connected to the second engagement portion (42; and the first engagement portion (41) and the second engagement portion (42) are eccentrically arranged relative to a rotational center of an axis of the atomizer assembly (2).

## Description

### FIELD OF TECHNOLOGY

The present application relates to the technical field of electronic vaporizing devices and, more particularly, to an aerosol generating device.

### BACKGROUND

Current aerosol generating devices such as electronic cigarettes have a cylindrical shape, and atomizers such as atomizing cartridges are able to rotate 360 degrees in the chamber and cannot be circumferentially positioned in the chamber. This usually lead to poor contact between spring electrode pins of the battery and the atomizer's heating coil. At the same time, due to the rotation of the atomizer, the special appearance design of the atomizers cannot be aligned with the LOGO of the product, which affects the overall styling and appearance of the product.

### SUMMARY

The present application discloses an aerosol generating device, mainly designed to solve the problem of poor electrical contact between the atomizer and the battery.

According to an embodiment of the present application, there is provided an aerosol generating device, including:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein an end of the atomizer assembly towards the battery assembly is axially arranged with a first engagement portion, an end of the battery assembly towards the atomizer assembly is axially arranged with a second engagement portion, the first engagement portion is plug-in connected to the second engagement portion, the first engagement portion and second engagement portion are eccentrically arranged relative to an axially rotational center of the atomizer assembly, respectively.

In an embodiment, the first engagement portion is a recess, and the second engagement portion is a protrusion; or, the first engagement portion is a protrusion, and the second engagement portion is a recess.

In an embodiment, an end of the atomizer assembly towards the battery assembly is provided with a first positive terminal and a first negative terminal, an end of the battery assembly towards the atomizer assembly is provided with a second positive terminal and a second negative terminal, the first positive terminal and the second positive terminal are electrically connected to each other, and the first negative terminal and the second negative terminal are electrically connected to each other.

An embodiment of the present application discloses an aerosol generating device, including:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein an end of the atomizer assembly towards the battery assembly is axially arranged with a first positive engagement portion and a first negative engagement portion, an end of the battery assembly towards the atomizer assembly is axially arranged with a second positive engagement portion and a second negative engagement portion, the first positive engagement portion is plug-in connected to the second positive engagement portion, and the first negative engagement portion is plug-in connected to the second negative engagement portion.

In an embodiment, the first positive engagement portion includes a first recess and a first positive terminal, the first positive terminal is located in the first recess, the first negative engagement portion includes a second recess and a second negative terminal, the second negative terminal is located in the second recess.

In an embodiment, wherein the second positive engagement portion includes a first protrusion and a second positive terminal, the first protrusion is axially arranged with a first assembling hole, the second positive terminal is mounted in the first assembling hole, an end of the second positive terminal protrudes outside of the first assembling hole; the second negative engagement portion comprises a second protrusion and a second negative terminal, the second protrusion is axially arranged with a second assembling hole, the second negative terminal is mounted in the second assembling hole, an end of the second negative terminal is exposed out of the second assembling hole; the first positive terminal and the second positive terminal are electrically connected to each other, and the first negative terminal and the second negative terminal are electrically connected to each other.

In an embodiment, at least one of the first positive terminal and the second positive terminal is axial elastic conductive structure, at least one of the first negative terminal and the second negative terminal is axial elastic conductive structure.

An embodiment of the present application discloses an aerosol generating device including:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein the atomizer assembly is axially arranged with a first engagement portion, the outer housing is axially arranged with a second engagement portion, the first engagement portion is plug-in connected to the second engagement portion.

In an embodiment, the first engagement portion is a protrusion located on a circumferential side of the atomizer assembly, the second engagement portion is a first opening recess located at the outer housing, the protrusion and the first opening recess are both located at the first opening.

In an embodiment, the first engagement portion is a protrusion located on a circumferential side of the atomizer assembly, the second engagement portion is a recess located on an inner surface of the outer housing, the protrusion and the recess are both located at the first opening.

In the aerosol generating device according to the embodiments described above, since there are a first engagement portion and a second engagement portion by a plug-in way and arranged axially between the atomizer assembly and the battery assembly, and the first engagement portion and second engagement portion are eccentrically arranged, this limits the freedom of circumferential rotation of the atomizer assembly, thereby serving as a circumferentially position function. This ensures the stability of the electrical connection between the atomizer assembly and the battery assembly, and facilitates alignment of the exposed part of the atomizer assembly with the outer housing, such as LOGO alignment, ensuring the aesthetic appeal of the overall design.

### BRIEF DESCRIPTION OF THE DRAWINGS

FIG. 1 is a schematic structural diagram of an aerosol generating device according to an embodiment;
FIG. 2 is an axial structural diagram of the aerosol generating device in an assembled state according to an embodiment;
FIG. 3 is an axial structural diagram of the aerosol generating device in a disassembled state according to an embodiment;
FIG. 4 is a partial axial structural diagram of the aerosol generating device in an assembled state according to an embodiment;
FIG. 5 is an axial structural diagram of the aerosol generating device in an assembled state according to an embodiment;
FIG. 6 is an axial structural diagram of the aerosol generating device in a disassembled state according to an embodiment;
FIG. 7 is an axial structural diagram of the aerosol generating device in an assembled state according to an embodiment;
FIG. 8 is an axial structural diagram of the aerosol generating device in a disassembled state according to an embodiment;

The following reference numerals are used in the drawings:
1 - outer housing, 2 - atomizer assembly, 21 - atomizer housing, 22 - atomizer, 3 - battery assembly, 31 - battery housing, 32 - battery, 33 - cap, 41 - first engagement portion, 42 - second engagement portion, 43 - first positive engagement portion, 431 - first recess, 432 - first positive terminal, 44 - first negative engagement portion, 441 - second recess, 442 - second negative terminal, 45 - second positive engagement portion, 451 - first protrusion, 452 - second positive terminal, 46 - second negative engagement portion, 461 - second protrusion, 462 - second negative terminal..

### DESCRIPTION OF THE EMBODIMENTS

Further detailed description of the present application will be provided below with reference to the accompanying drawings. Like elements in different embodiments are identified with corresponding reference numerals. Many of the details described below are included to better enable understanding of the present application. However, those skilled in the art will readily recognize that certain features can be omitted or substituted by other elements, materials, or methods under different circumstances. Some operations related to the present application are not shown or described in the specification to avoid overwhelming the core aspects of the application with excessive details. For those skilled in the art, detailed descriptions of these operations are not necessary, as they can fully understand the operations based on the description in the specification and general technical knowledge in the field.

The features, operations, or characteristics described in the specification can be combined in any suitable manner to form various embodiments. Additionally, the order of steps or actions in the method descriptions can be rearranged or adjusted in a manner that is apparent to those skilled in the art. Therefore, the various orders in the specification and drawings are for the purpose of clearly describing a particular embodiment and do not imply a required order unless otherwise specified that a particular order must be followed.

The ordinal numbers assigned to components in this text, such as "first" and "second," are used solely to distinguish the described objects and do not carry any order or technical significance. The terms "connect" or "join" used in this application, unless otherwise specified, include both direct and indirect connections. The upper end in this text refers to the end closer to the mouthpiece, while the lower end refers to the end farther from the mouthpiece.

The embodiment discloses an aerosol generating device. In the embodiment, the aerosol generating device has a redesigned air intake channel, which is positioned on the side away from a battery assembly. This allows the air intake channel to bypass the battery assembly, preventing any unwanted odors or tastes from the battery assembly from mixing into the air entering the atomizer assembly, ensuring the freshness of the incoming air and improving the smoking experience.

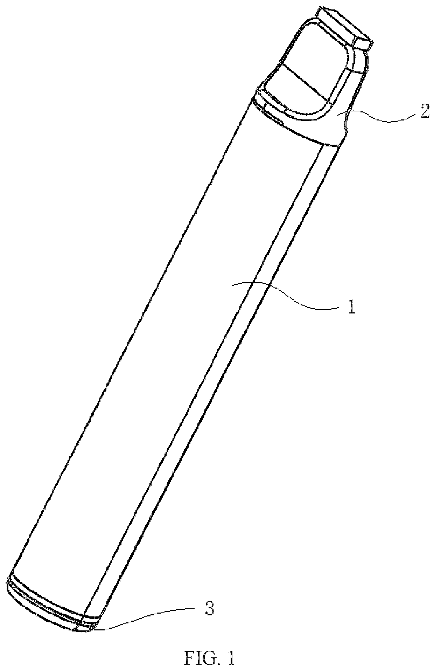

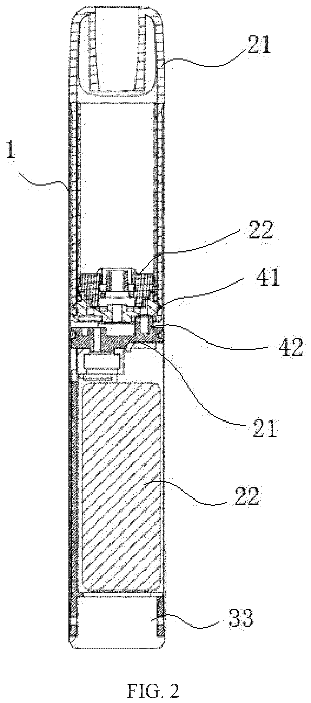

Refer to FIG. 1 and FIG. 2, the aerosol generating device in the embodiment mainly includes an outer housing 1, an atomizer assembly 2, and a battery assembly 3. The outer housing 1 has a cylindrical structure and may also be a flat cylindrical or elliptical cylindrical structure. The outer housing 1 has an accommodating chamber, and both ends of the outer housing 1 are respectively provided with a first opening and a second opening, both communicating with the accommodating chamber. The atomizer assembly 2 and the battery assembly 3 are pillar-shaped structures, and they are installed in the outer housing 1 in an axial series configuration. An end of the atomizer assembly 2 away from the battery assembly 3 is exposed out of the accommodating chamber from the first opening. The part of the exposed end of the atomizer assembly 2 is for smoking use as a mouthpiece, while the part of the atomizer assembly 2 locating inside the outer housing 1 is for generating aerosol. An end of the battery assembly 3 away from the atomizer assembly 2 blocks the second opening. The battery assembly 3 is electrically connected to the atomizer assembly 2 to power it.

In other embodiments, the outer housing 1 may also be constructed with one open end and one close end, the open end enables the battery assembly 3 and the atomizer assembly 2 to be sequentially installed inside the outer housing 1.

The atomizer assembly 2 mainly includes an atomizer housing 21 and an atomizer 22. An end of the atomizer housing 21 is cylindrical, and the other end is a flat duck-bill shaped structure. The cylindrical part of the atomizer housing 21 is installed inside the accommodating chamber of the outer housing 1, while the duck-bill shaped structure is located outside the accommodating chamber of the outer housing 1, serving as the mouthpiece. The atomizer 22 is an atomizing core body, installed inside the cylindrical structure of the atomizer housing 21. The atomizer housing 21 has an atomizing channel 44 that extends axially from one end to the other. The atomizer 22 is located on the atomizing channel 44 or constructed a part of the atomizing channel 44. The atomizing channel 44 has two ends: a connection port and an outlet. The connection port is located inside the accommodating chamber of the outer housing 1, and is located at an end of the atomizer 22 away from the first opening, and the outlet is located on the duck-bill shaped structure of the atomizer housing 21.

The battery assembly 3 mainly includes a battery housing 31 and a battery 32. The battery housing 31 is a cylindrical structure with a cylindrical cavity inside, where the battery 32 is installed. The battery housing 31 has a cap 33 located at one end adjacent to the second opening. The cap 33 is fixedly connected to the battery housing 31 and is used for the assembly and disassembly of the battery assembly 3. The cap 33 and the battery housing 31 may also be an one-piece structure. The end of the battery housing 31 away from the cap 33 is provided with an electrical circuit structure that is electrically connected to the battery 32 and the atomizer 22, allowing the electrical energy from the battery 32 to be delivered to the atomizer 22. The battery 32 can be a rechargeable energy storage battery, and a charging port can be set on the cap 33 or the outer housing 1 to enable charging of the battery 32.

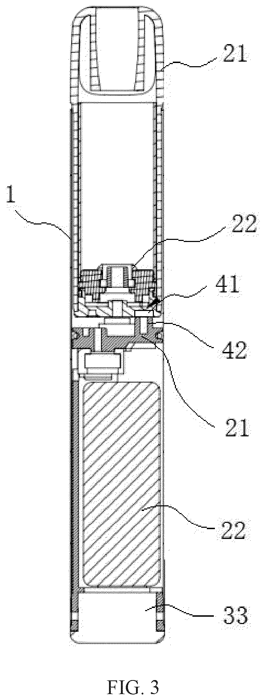

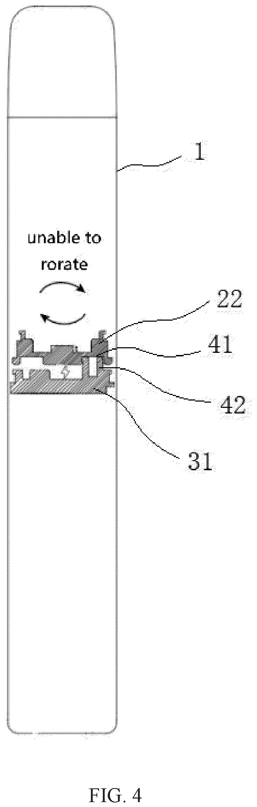

Refer to FIG. 2, FIG. 3 and FIG. 4, in the embodiment, the atomizer 22 is provided with a first engagement portion 41 at one end towards the battery housing 31, and the battery housing 31 is provided with a second engagement portion 42 at one end towards the atomizer 22. The first engagement portion 41 is provided with an axial recess, and the second engagement portion 42 is provided with an axial protrusion. The recess matches the protrusion, and the first engagement portion 41 and the second engagement portion 42 are axially aligned. The second engagement portion 42 can be detachably plugged into the first engagement portion 41, and the first and second engagement portions are eccentrically arranged relative to the circumferential rotation center of the atomizer 22. This arrangement restricts the freedom of circumferential rotation of the atomizer 22 and the entire atomizer assembly 2, thereby achieving circumferential positioning installation of the atomizer assembly 2.

Specifically, the first engagement portion 41 is a cylindrical recess, and the second engagement portion 42 is a cylindrical protrusion. Both the cylindrical recess and the cylindrical protrusion have inclined guide surfaces on their end edges to facilitate the smooth insertion of the cylindrical protrusion into the cylindrical recess during assembly.

In other embodiments, the first engagement portion 41 and the second engagement portion 42 can also be other types of plug-in structures, such as the first engagement portion 41 being a square recess and the second engagement portion 42 being a square protrusion, which can also achieve plug-in cooperation and circumferential positioning of the atomizer assembly 2.

In other embodiments, the first engagement portion 41 can be a protrusion, and the second engagement portion 42 can be a corresponding recess, also achieving plug-in cooperation and circumferential positioning of the atomizer assembly 2.

In the embodiment, an end of the atomizer 22 towards the battery housing 31 is provided with a first positive terminal and a first negative terminal, and an end of the battery housing 31 towards the atomizer 22 is provided with a second positive terminal and a second negative terminal. The first positive terminal is electrically connected to the second positive terminal, and the first negative terminal is electrically connected to the second negative terminal. The first positive and negative terminals are connected to a heating element inside the atomizer 22, and the second positive and negative terminals are connected to the battery 32. The electrical connection between the first positive terminal, the second positive terminal, the first negative terminal and the second negative terminal forms a complete electrical circuit, enabling the electrical energy from the battery 32 to power the heating element inside the atomizer 22 to generate heat and produce aerosol.

In the embodiment, a first engagement portion 41 and a second engagement portion 42 are provided between the atomizer assembly 2 and the battery assembly 3, which are axially insert-connected and eccentrically arranged. This arrangement restricts the freedom of circumferential rotation of the atomizer assembly 2, serving to circumferentially position it. It ensures the stability of the electrical connection between the atomizer assembly 2 and the battery assembly 3 and facilitates alignment of the exposed part of the atomizer assembly 2 with the outer housing 1, such as LOGO alignment, ensuring the aesthetic appeal of the overall design.

In one embodiment, an aerosol generating device is provided, which differs from the aforementioned embodiments in the configuration of the circumferential positioning structure.

In the embodiment, the circumferential positioning structure is integrated onto the terminals to form an integrated structure for circumferential positioning and electrical connection. This also prevents the atomizer assembly 2 from rotating during use, affecting the stability and safety of the electrical connection.

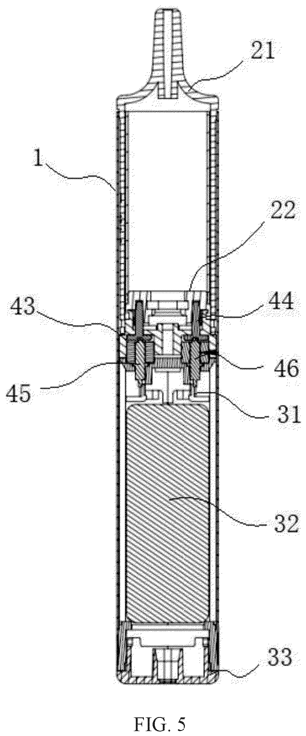

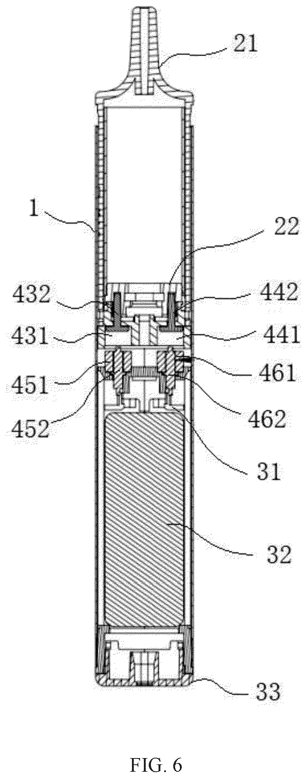

Refer to FIG. 5 and FIG. 6, in the embodiment, an end of the atomizer 22 towards the battery housing 21 is provided with a first positive engagement portion 43 and a first negative engagement portion 44. An end of the battery housing 21 towards the atomizer 22 is provided with a second positive engagement portion 45 and a second negative engagement portion 46. The first positive engagement portion 43 is axially aligned with the second positive engagement portion 45 and is insert-connected to it, simultaneously achieving electrical connection. The first negative engagement portion 44 is axially aligned with the second negative engagement portion 46 and is insert-connected to it, simultaneously achieving electrical connection.

Specifically, the first positive engagement portion 43 includes a first recess 431 and a first positive terminal 432. The bottom of the first recess 431 has an installation hole, and the first positive terminal 432 is installed in the installation hole of the first recess 431, with the end of the first positive terminal 432 located inside the first recess 431. The first negative engagement portion 44 includes a second recess 441 and a first negative terminal 442. The bottom of the second recess 441 has an installation hole, and the first negative terminal 442 is installed in the installation hole of the second recess 441, with the end of the first negative terminal 442 located inside the second recess 441. The second positive engagement portion 45 includes a first protrusion 451 and a second positive terminal 452. The first protrusion 451 has an axial first installation hole, and the second positive terminal 452 is installed in the first installation hole, with the end of the second positive terminal 452 protrudes outside of the first installation hole. The second negative engagement portion 46 includes a second protrusion 461 and a second negative terminal 462. The second protrusion 461 has an axial second installation hole, and the second negative terminal 462 is installed in the second installation hole, with the end of the second negative terminal 462 protrudes outside of the second installation hole.

In an inserted state, the first protrusion 451 is inserted into the first recess 431, the first positive terminal 432 and the second positive terminal 452 are electrically connected, the second protrusion 461 is inserted into the second recess 441, and the first negative terminal 442 and the second negative terminal 462 are electrically connected. The insert connection of the protrusions and recesses achieves circumferential positioning of the atomizer assembly 2, while the connection of the positive and negative terminals achieves electrical connection.

Specifically, the first positive terminal 432 and the first negative terminal 442 are T-shaped conductive structures. A crossbar of the T-shaped conductive structure is located in the recess, and an upright bar is located in the installation hole, the T-shaped conductive structure is electrically connected to the heating element of the atomizer 2. The second positive terminal 452 and the second negative terminal 462 are pins, which are electrically connected to the battery 32. The pins protrude from the end of the protrusion and make contact with the crossbar of the T-shaped conductive structure to achieve electrical connection.

In the embodiment, the pins are connected to a spring, therefore the pins are axially elastic structures. Under the action of the spring, the pins can stably press against the T-shaped conductive structure, eliminating axial installation errors and ensuring the stability of the electrical connection.

In other embodiments, the T-shaped conductive structure can be designed as an axially elastic structure, and the pins can be designed as fixed structures; or both the T-shaped conductive structure and the pins can be designed as axially elastic structures, both of which can improve the stability of the electrical connection.

In the embodiment, since there are two protrusion structures and two recess structures, the radial positions of the protrusion structures and recess structures can be arbitrarily set, as long as one protrusion is corresponding to one recesses. For example, one protrusion structure and one recess structure are aligned on the circumferential rotation centerline of the atomizer assembly 2, and another protrusion structure and another recess structure are aligned at another radial position, which can achieve circumferential positioning of the atomizer assembly 2.

In other embodiments, the first positive engagement portion 43 and the first negative engagement portion 44 can be designed as two protrusion structures, or can be designed as one protrusion and one recess; the second positive engagement portion 45 and the second negative engagement portion 46 can be designed as the corresponding two recess structures, or can be designed as one recess and one protrusion, ensuring a one-to-one correspondence between one recess and one protrusion, which can also achieve circumferential positioning of the atomizer assembly 2 and electrical connection.

In one embodiment, an aerosol generating device is provided, which differs from the aforementioned embodiment in that the circumferential positioning structure is set differently.

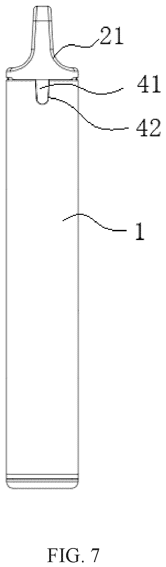

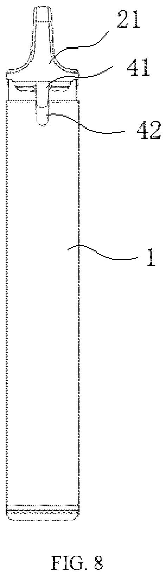

Refer to FIG. 7 and FIG. 8, in the embodiment, the circumferential positioning structure is located between the outer housing 1 and the atomizer assembly 2, preventing the atomizer assembly 2 from rotating with respect to the outer housing 1. This also achieves circumferential positioning of the atomizer assembly 2, avoiding rotation of the atomizer assembly 2 during use, which could affect the stability and safety of the electrical connection.

In the embodiment, an upper end of the atomizer housing 21 is provided with a first engagement portion 41, and an upper end of the circumferential side of the outer housing 1 is provided with a second engagement portion 42. The first engagement portion 41 and the second engagement portion 42 are located at the first opening. The first engagement portion 41 is an axial protrusion, which is a strip-like structure, and the second engagement portion 42 is an open slot extending downward from the upper edge of the outer housing 1. During installation, the first engagement portion 41 is inserted from top to bottom into the second engagement portion 42, with the protrusion fitting into the open slot. The plug-in connection of the first engagement portion 41 and the second engagement portion 42 also restricts the freedom of circumferential rotation of the atomizer assembly 2, thereby achieving circumferential positioning of the atomizer assembly 2. This prevents rotation of the atomizer assembly 2 during use and potential impacts on the stability and safety of the electrical connection.

In other embodiments, the radial protrusion height of the first engagement portion 41 is reduced, and the second engagement portion 42 is set as a groove on the inner surface of the outer housing 1. The groove is a strip-shaped slot, which can also form a plug-in connection of the protrusion and groove, achieving circumferential positioning of the atomizer assembly 2.

The above application of specific examples to illustrate the present application is only for the purpose of aiding understanding and is not intended to limit the present application. For those skilled in the art to which the present application pertains, based on the concepts of the present application, they can also make several simple extrapolations, modifications, or substitutions.

## Claims

1. An aerosol generating device, comprising:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein an end of the atomizer assembly towards the battery assembly is axially arranged with a first engagement portion, an end of the battery assembly towards the atomizer assembly is axially arranged with a second engagement portion, the first engagement portion is plug-in connected to the second engagement portion, the first engagement portion and the second engagement portion are eccentrically arranged relative to an axial rotational center of the atomizer assembly, respectively.

2. The aerosol generating device according to claim 1, wherein the first engagement portion is a recess, and the second engagement portion is a protrusion; or, the first engagement portion is a protrusion, and the second engagement portion is a recess.

3. The aerosol generating device according to claim 1, wherein an end of the atomizer assembly towards the battery assembly is provided with a first positive terminal and a first negative terminal, an end of the battery assembly towards the atomizer assembly is provided with a second positive terminal and a second negative terminal, the first positive terminal and the second positive terminal are electrically connected to each other, and the first negative terminal and the second negative terminal are electrically connected to each other.

4. An aerosol generating device comprising:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein an end of the atomizer assembly towards the battery assembly is axially arranged with a first positive engagement portion and a first negative engagement portion, an end of the battery assembly towards the atomizer assembly is axially arranged with a second positive engagement portion and a second negative engagement portion, the first positive engagement portion is plug-in connected to the second positive engagement portion, and the first negative engagement portion is plug-in connected to the second negative engagement portion.

5. The aerosol generating device according to claim 4, wherein the first positive engagement portion comprises a first recess and a first positive terminal, the first positive terminal is located in the first recess, the first negative engagement portion includes a second recess and a second negative terminal, the second negative terminal is located in the second recess.

6. The aerosol generating device according to claim 5, wherein the second positive engagement portion comprises a first protrusion and a second positive terminal, the first protrusion is axially arranged with a first assembling hole, the second positive terminal is mounted in the first assembling hole, an end of the second positive terminal protrudes outside of the first assembling hole; the second negative engagement portion comprises a second protrusion and a second negative terminal, the second protrusion is axially arranged with a second assembling hole, the second negative terminal is mounted in the second assembling hole, an end of the second negative terminal protrudes outside of the second assembling hole; the first positive terminal and the second positive terminal are electrically connected to each other, and the first negative terminal and the second negative terminal are electrically connected to each other.

7. The aerosol generating device according to claim 5, wherein at least one of the first positive terminal and the second positive terminal is axial elastic conductive structure, at least one of the first negative terminal and the second negative terminal is axial elastic conductive structure.

8. An aerosol generating device comprising:
an outer housing having an accommodating chamber, wherein an end of the outer housing is provided with a first opening communicating with the accommodating chamber;
an atomizer assembly installed in the accommodating chamber of the outer housing, wherein an end of the atomizer assembly is exposed out of the accommodating chamber through the first opening; and
a battery assembly installed in the accommodating chamber of the outer housing;
wherein the atomizer assembly is axially arranged with a first engagement portion, the outer housing is axially arranged with a second engagement portion, the first engagement portion is plug-in connected to the second engagement portion.

9. The aerosol generating device according to claim 8, wherein the first engagement portion is a protrusion located on a circumferential side of the atomizer assembly, the second engagement portion is a first opening recess located at the outer housing, the protrusion and the first opening recess are both located at the first opening.

10. The aerosol generating device according to claim 8, wherein the first engagement portion is a protrusion located on a circumferential side of the atomizer assembly, the second engagement portion is a recess located on an inner surface of the outer housing, the protrusion and the recess are both located at the first opening.
